# EUROPEAN PATENT APPLICATION

(11) **EP 4 450 218 A1**
(43) Date of publication of application: **23.10.2024**
(21) Application number: 22920170.2
(22) Date of filing: 11.01.2022
(51) Int. Cl.: B23Q 7/00, B23Q 41/02

(54) **CONVEYANCE SYSTEM, CONTROL METHOD, AND CONTROL PROGRAM**

(71) Applicant: DMG Mori Co., Ltd., Yamatokoriyama-shi, Nara 639-1160 (JP)
(72) Inventor: SUN Xinwei, Yamatokoriyama-shi Nara 639-1160 (JP); NAKAMURA Takayuki, Yamatokoriyama-shi Nara 639-1160 (JP)
(74) Representative: Isarpatent
(86) International application number: PCT/JP2022/000550
(87) International publication number: WO 2023/135644

(57) **Abstract**

A workpiece transport system (10) includes a transport route (330), a first transport apparatus (340A) configured to travel on the transport route (330) and for transporting a workpiece, a second transport apparatus (340B) configured to travel on the transport route (330) and for transporting a workpiece, a machine tool (400) for machining a workpiece transported by the first transport apparatus (340A) or the second transport apparatus (340B), and a control part for controlling the transport system (10). The control part executes processing for determining whether a collision between the first transport apparatus (340A) and the second transport apparatus (340B) will occur when the first transport apparatus (340A) transports a workpiece to be machined to the machine tool (400), and, if it is determined that a collision will occur, executes processing for controlling the drive of the first transport apparatus (340A) and the drive of the second transport apparatus (340B) such that the collision does not occur, and transporting the workpiece to be machined to the machine tool (400).

## Description

### Technical Field

The present disclosure relates to a transport system, a control method, and a control program.

### Background Art

Patent Document 1 (Japanese Patent No. 6918259) discloses a transport system capable of automatically transporting workpieces. The transport system includes a workpiece storage part, a workpiece transport apparatus, a machine tool, and a workstation.

At the workstation, an operator sets a workpiece to be machined. Thereafter, the transport apparatus stores the workpiece in the storage part. When the machining timing of the workpiece arrives, the transport apparatus transports the workpiece from the storage part to the machine tool. When machining of the workpiece is completed, the transport apparatus transports the workpiece to the storage part or the workstation.

### Citation List

### Patent Document

Patent Document 1: Japanese Patent No. 6918259

### Summary of Invention

### Technical Problem

The transport system disclosed in Patent Document 1 includes one transport apparatus. In order to improve the efficiency with which workpieces are transported, a plurality of transport apparatuses are required. When a plurality of transport apparatuses share a transport route, the transport apparatuses could possibly collide with each other. Accordingly, it is desired to improve the efficiency with which workpieces are transported while avoiding collisions between the transport apparatuses.

### Solution to Problem

In one example of the present disclosure, a workpiece transport system includes a transport route, a first transport apparatus configured to travel on the transport route and for transporting a workpiece, a second transport apparatus configured to travel on the transport route and for transporting a workpiece, a machine tool for machining a workpiece transported by the first transport apparatus or the second transport apparatus, and a control part for controlling the transport system. The control part executes processing for determining whether a collision between the first transport apparatus and the second transport apparatus will occur when the first transport apparatus transports a workpiece to be machined to the machine tool, and, if it is determined that the collision will occur, executes processing for controlling a drive of the first transport apparatus and a drive of the second transport apparatus such that the collision does not occur, and transporting the workpiece to be machined to the machine tool.

In the one example of the present disclosure, the processing for transporting includes processing for transferring the workpiece to be machined from the first transport apparatus to the second transport apparatus, and processing for controlling the drive of the second transport apparatus so as to transport the workpiece to be machined transferred to the second transport apparatus to the machine tool.

In the one example of the present disclosure, the transport system further includes a storage part capable of storing a plurality of workpieces. The processing for transferring includes processing for driving the first transport apparatus so as to store the workpiece to be machined in a temporary holding area within the storage part, and processing for transferring the workpiece to be machined stored in the temporary holding area from the temporary holding area to the second transport apparatus.

In the one example of the present disclosure, the control part further executes processing for determining, as the temporary holding area, a free area close to the machine tool among free areas within the storage part on the first transport apparatus side of the second transport apparatus.

In the one example of the present disclosure, the control part further executes processing for controlling the drive of the second transport apparatus so as to keep the second transport apparatus at a distance from the first transport apparatus, before executing the processing for determining.

In the one example of the present disclosure, in the processing for determining, it is determined that the collision will occur, if the second transport apparatus is on the travel route when the first transport apparatus is transporting the workpiece to be machined to the machine tool.

In another example of the present disclosure, a control method in a workpiece transport system is provided. The transport system includes a transport route, a first transport apparatus configured to travel on the transport route and for transporting a workpiece, a second transport apparatus configured to travel on the transport route and for transporting a workpiece, and a machine tool for machining a workpiece transported by the first transport apparatus or the second transport apparatus, the control method includes a step of determining whether a collision between the first transport apparatus and the second transport apparatus will occur when the first transport apparatus transports a workpiece to be machined to the machine tool, and a step of, if it is determined that the collision will occur, controlling a drive of the first transport apparatus and a drive of the second transport apparatus such that the collision does not occur, and transporting the workpiece to be machined to the machine tool.

In another example of the present disclosure, a control program in a workpiece transport system is provided. The transport system includes a transport route, a first transport apparatus configured to travel on the transport route and for transporting a workpiece, a second transport apparatus configured to travel on the transport route and for transporting a workpiece, and a machine tool for machining a workpiece transported by the first transport apparatus or the second transport apparatus. The program causes the transport system to execute a step of determining whether a collision between the first transport apparatus and the second transport apparatus will occur when the first transport apparatus transports a workpiece to be machined to the machine tool, and a step of, if it is determined that the collision will occur, controlling a drive of the first transport apparatus and a drive of the second transport apparatus such that the collision does not occur, and transporting the workpiece to be machined to the machine tool.

The above and other objects, features, aspects and advantages of the present invention will become apparent from the following detailed description relating to the invention, taken in conjunction with the attached drawings.

### Brief Description of Drawings

FIG. 1 is a conceptual diagram schematically showing the configuration of a transport system.
FIG. 2 is a diagram showing an example of a device configuration of the transport system.
FIG. 3 is a diagram showing an example of a workpiece transport process.
FIG. 4 is a diagram showing an example of functional configurations of the transport system.
FIG. 5 is a diagram showing an example of the data structure of machining settings.
FIG. 6 is a diagram showing an example of the data structure of workpiece information.
FIG. 7 is a diagram showing an example of the data structure of a transport schedule.
FIG. 8 is a diagram showing an example of drive processes of transport apparatuses.
FIG. 9 is a diagram showing the drive processes of the transport apparatuses following FIG. 8.
FIG. 10 is a diagram showing the drive processes of the transport apparatuses following FIG. 9.
FIG. 11 is a diagram showing the drive processes of the transport apparatuses following FIG. 10.
FIG. 12 is a diagram showing an example of drive processes of transport apparatuses.
FIG. 13 is a diagram showing the drive processes of the transport apparatuses following FIG. 12.
FIG. 14 is a schematic diagram showing an example of the hardware configuration of a control system.
FIG. 15 is a block diagram showing the main hardware configuration of a PLC (Programmable Logic Controller).
FIG. 16 is a block diagram showing the main hardware configuration of a machine tool.
FIG. 17 is a schematic diagram showing an example of the hardware configuration of an operation terminal.
FIG. 18 is a flowchart showing the flow of transport control processing by the transport system.
FIG. 19 is a diagram showing an example of drive processes of transport apparatuses.
FIG. 20 is a diagram showing the drive processes of the transport apparatuses following FIG. 19.
FIG. 21 is a diagram showing the drive processes of the transport apparatuses following FIG. 20.
FIG. 22 is a diagram showing the drive processes of the transport apparatuses following FIG. 21.

### Description of Embodiments

Hereinafter, embodiments according to the present invention will be described with reference to the drawings. In the following description, components and constituent elements that are the same are given the same reference numerals. The names and functions of these components and constituent elements are also the same. Accordingly, detailed description thereof will not be repeated. Note that the embodiments and modifications described below may be selectively combined as appropriate.

### <A. External Appearance of Transport System 10>

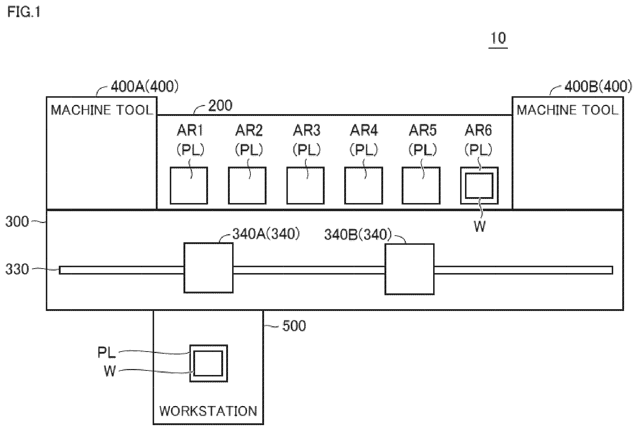

A transport system 10 will now be described, with reference to FIG. 1. FIG. 1 is a conceptual diagram schematically showing the configuration of the transport system 10.

As shown in FIG. 1, the transport system 10 includes a storage part 200, a transport part 300, a machine tool 400, and a workstation 500.

The storage part 200 is one destination to which workpieces are transported by the transport part 300. The storage part 200 is configured to store a plurality of pallets PL. In the example in FIG. 1, the storage part 200 has storage areas AR1 to AR6. The pallets PL are configured such that a workpiece W can be attached thereto. The storage part 200 can store empty pallets PL to which a workpiece W is not attached, pallets PL to which a workpiece W that has not yet undergone machining is attached, pallets PL to which a workpiece W that is undergoing machining is attached, pallets PL to which a workpiece W that has undergone machining is attached, and the like. Note that the storage areas AR1 to AR6 of the storage part 200 may be constituted by one level or by a plurality of levels.

The transport part 300 includes a transport route 330 and a plurality of transport apparatuses 340. In the example in FIG. 1, the transport part 300 is constituted by two transport apparatuses 340A and 340B. Hereinafter, when not particularly distinguishing between the transport apparatuses 340A and 340B, the transport apparatuses 340A and 340B will also be referred to as transport apparatus 340. The transport part 300 may be constituted by three or more transport apparatuses 340.

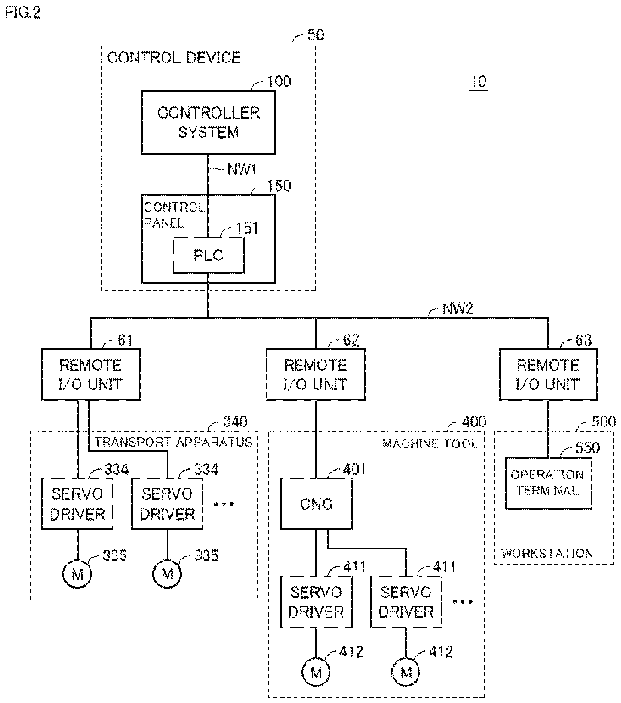

The transport apparatus 340 is configured to travel on the transport route 330, and transports a designated pallet PL to a designated location. The transport apparatus 340 is, for example, driven along the transport route 330 by a servo motor 335 (see FIG. 2) described later.

As an example, the transport route 330 is a straight rail, and the transport apparatus 340 is trolley that travels on the rail. The trolley has a fork part configured to be drivable in a direction orthogonal to the transport route 330 (i.e., direction orthogonal to the travel direction of the trolley). The trolley moves along the transport route 330 to the position of a pallet PL to be transported, and the pallet PL to be transported is loaded onto the trolley using the fork part. Thereafter, the trolley moves along the transport route 330 to the designated transport destination, and the pallet PL to be transported is unloaded to the transport destination using the fork part. Note that the transport apparatus 340 may be provided with an arm robot, instead of the fork part.

The machine tool 400 is one destination to which the pallets PL are transported by the transport part 300. In the example in FIG. 1, the transport system 10 is constituted by two machine tools 400A and 400B. Hereinafter, when not particularly distinguishing between the machine tools 400A and 400B, the machine tools 400A and 400B will also be referred to as machine tool 400. The transport system 10 may also be constituted by one machine tool 400 or by two or more machine tools 400. Also, the machine tool 400 may be a machining center, a lathe, or an additional machining device, or may be another machining device such as a cutting machine or a grinding machine.

The machine tool 400 machines the workpiece W attached to an unloaded pallet PL, in accordance with a predesigned machining program. When machining of the workpiece W is completed, the pallet PL inside the machine tool 400 is transported to the storage part 200 or the workstation 500 by the transport apparatus 340.

The workstation 500 is one destination to which the pallets PL are transported by the transport part 300. In the example in FIG. 1, an example is shown in which the transport system 10 is constituted by one workstation 500, but the transport system 10 may be constituted by two or more workstations 500.

At the workstation 500, the operator performs various work on an unloaded pallet PL. As an example, at the workstation 500, the operator performs work for attaching a workpiece W to be machined to the unloaded pallet PL or work for removing a machined workpiece W from the pallet PL. When work on the pallet PL is completed, the operator performs an operation for instructing that work is completed. In response to this instruction, the pallet PL inside the workstation 500 is transported to the storage part 200 or the machine tool 400 by the transport apparatus 340.

<B. Device Configuration of Transport System 10>

FIG. 2 is a diagram showing an example of the device configuration of the transport system 10. An example of the device configuration of the transport system 10 will now be described, with reference to FIG. 2.

As shown in FIG. 2, the transport system 10 includes a control part 50, remote I/O (Input/Output) units 61 to 63, the transport apparatus 340, the machine tool 400, and the workstation 500.

"Control part 50" as referred to herein means a device that controls the transport system 10. The device configuration of the control part 50 is not particularly limited. The control part 50 may be constituted by a single control unit or by a plurality of control units. In the example in FIG. 2, the control part 50 is constituted by a control system 100 and a control panel 150. The control part 50 may also include a CNC 401 that controls the machine tool 400, an operation terminal 550 within the workstation 500, or the like.

The control system 100 is a main computer that controls the transport system 10. The control panel 150 controls various industrial devices for automating the machining process. The control panel 150 includes a PLC 151.

The control system 100 and the PLC 151 are connected to a network NW1. The control system 100 and the PLC 151 may be connected in a communicable manner by cable or wirelessly. The network NW1 employs EtherNET (registered trademark) or the like. The control system 100 sends a control instruction to the PLC 151 via the network NW1. The control instruction designates a pallet PL to be transported, a transport destination of the designated pallet PL, transport start/stop of the pallet PL, and the like.

The remote I/O units 61 to 63 and the PLC 151 are connected to a network NW2. A field network that performs periodic communication in which the arrival time of data is guaranteed is preferably employed as the network NW2. EtherCAT (registered trademark), EtherNet/IP (registered trademark), CC-Link (registered trademark), CompoNet (registered trademark) or the like is employed as such a field network that performs periodic communication.

The transport apparatus 340 includes one or more servo drivers 334 and one or more servo motors 335. The remote I/O unit 61 is installed inside the transport part 300 or in the vicinity of the transport part 300. The remote I/O unit 61 mediates exchange of data between the servo drivers 334 and the PLC 151. The servo drivers 334 receive a control instruction from the PLC 151 via the remote I/O unit 61 at regular intervals and control the drive of the servo motors 335 in accordance with the control instruction. As an example, one servo motor 335 controls the travel of the trolley of the transport apparatus 340 (see FIG. 1), and the other servo motor 335 controls the drive of the fork part of the transport apparatus 340 (see FIG. 1).

The servo drivers 334 sequentially receive input of a target rotation speed (or target position) from the PLC 151 and control the servo motors 335 such that the servo motors 335 rotate at the target rotation speed. More specifically, the servo drivers 334 calculate the actual rotation speed (or actual position) of the servo motors 335 from the feedback signal of an encoder (not shown) for the servo motors 335. The servo drivers 334 increase the rotation speed of the servo motors 335 if the actual rotation speed is lower than the target rotation speed, and decrease the rotation speed of the servo motors 335 if the actual rotation speed is higher than the target rotation speed. In this way, the servo drivers 334 approximate the rotational speed of the servo motors 335 to the target rotation speed while sequentially receiving feedback of the rotational speed of the servo motors 335. The transport apparatus 340 is thereby able to move the pallets PL to any transport destination.

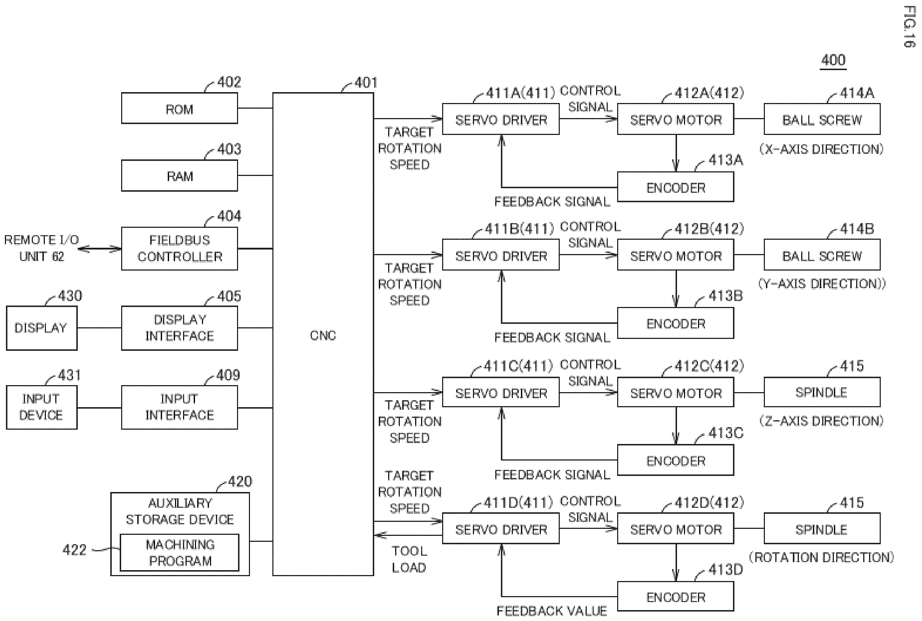

The machine tool 400 includes the CNC (Computer Numerical Control) 401, servo drivers 411, and servo motors 412. The remote I/O unit 62 is installed inside the machine tool 400 or in the vicinity of the machine tool 400. The remote I/O unit 62 mediates exchange of data between the PLC 151 and various drive units (e.g., CNC 401) within the machine tool 400. The servo drivers 411 receive a control instruction from the PLC 151 via the remote I/O unit 62 at regular intervals in a similar manner to the servo drivers 334 and control the drive of the servo motors 412 in accordance with the control instruction. The servo motors 412 drive spindles 415 (see FIG. 16) described later, and the like.

The workstation 500 includes an operation terminal 550 that receives operations by the operator. The remote I/O unit 63 is installed inside the workstation 500 or in the vicinity of the workstation 500. The remote I/O unit 63 mediates exchange of data between the operation terminal 550 and the PLC 151. The contents of operations by the operator on the operation terminal 550 are sent to the PLC 151 at regular intervals via the remote I/O unit 63.

### <C. Summary>

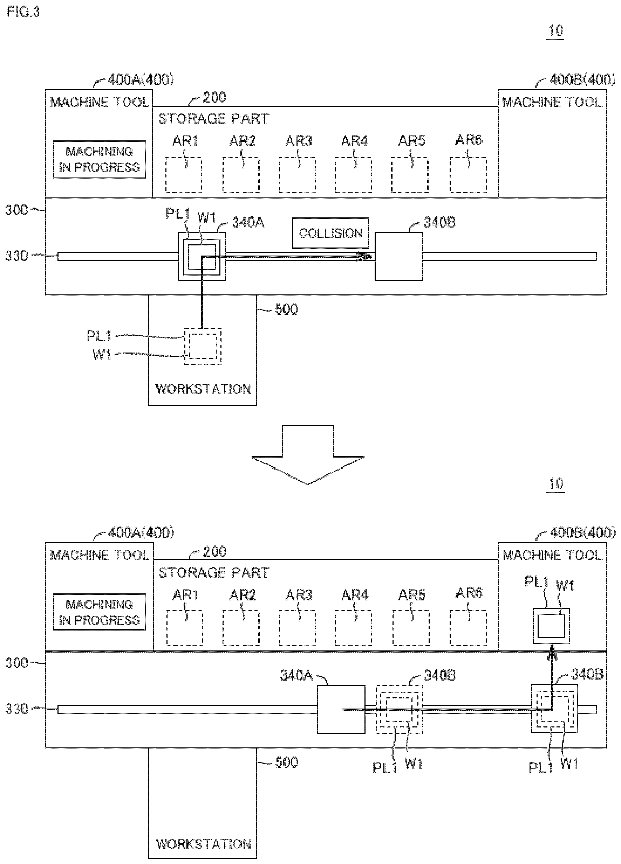

Next, transport control of a workpiece by the transport system 10 will be described, with reference to FIG. 3. FIG. 3 is a diagram showing an example of a workpiece transport process.

In the transport system 10 according to the present embodiment, the plurality of transport apparatuses 340A and 340B share one transport route 330. When the control part 50 of the transport system 10 drives the transport apparatuses 340A and 340B so as to transport a workpiece to be machined to the machine tool 400 by the shortest route, the transport apparatuses 340A and 340B could possibly collide with each other.

As an example, it is assumed that, at the workstation 500, work for attaching a workpiece W1 to a pallet PL1 is completed. If the machine tool 400A is machining another workpiece or the machine tool 400A does not support machining of the workpiece W1, the workpiece W1 is transported to the machine tool 400B instead of the machine tool 400A. At this time, the transport apparatus 340A will take the shortest transport route when transporting the workpiece W1 from the workstation 500 to the machine tool 400B. However, the other transport apparatus 340B is on the transport route of the transport apparatus 340A.

In view of this, the control part 50 determines whether a collision between the transport apparatus 340A and the transport apparatus 340B will occur when the transport apparatus 340A transports the workpiece W1 to be machined to the machine tool 400B. The determination may be performed at the timing at which transportation of the workpiece W1 by the transport apparatus 340A is started or before transportation of the workpiece W1 by the transport apparatus 340A is started.

If it is determined that a collision between the transport apparatus 340A and the transport apparatus 340B will occur, the control part 50 controls the drive of the transport apparatus 340A and the drive of the transport apparatus 340B such that the collision does not occur and transports the workpiece W1 to be machined to the machine tool 400B.

A collision between the transport apparatus 340A and the transport apparatus 340B is avoided by various methods. In the example in FIG. 3, first, the control part 50 transfers the workpiece W1 to be machined from the transport apparatus 340A to the transport apparatus 340B. The workpiece W1 may be transferred directly from the transport apparatus 340A to the transport apparatus 340B or may be transferred indirectly from the transport apparatus 340A to the transport apparatus 340B via a temporary holding area of the storage part 200 or the like. Thereafter, the control part 50 controls the drive of the transport apparatus 340B so as to transport the workpiece W1 to the machine tool 400B.

The control part 50 is thereby able to transport the workpiece W1 to the machine tool 400B while avoiding a collision between the transport apparatus 340A and the transport apparatus 340B. Also, because the transport system 10 is provided with the plurality of transport apparatuses 340A and 340B, the workpiece transport efficiency is higher than transporting a workpiece with one transport apparatus 340.

### <D. Functional Configurations of Control Part 50>

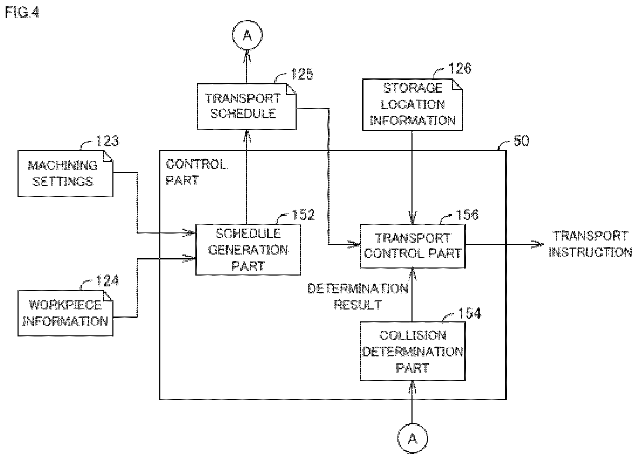

The functional configurations of the control part 50 (see FIG. 2) of the transport system 10 will now be described, with reference to FIGS. 4 to 11. FIG. 4 is a diagram showing an example of the functional configurations of the control part 50.

As shown in FIG. 4, the control part 50 includes a schedule generation part 152, a collision determination part 154, and a transport control part 156 as functional configurations. These functional configurations are implemented in the control system 100 (see FIG. 2) or the PLC 151 (See FIG. 2). Alternatively, these functional configurations may be implemented in the operation terminal 550 (see FIG. 2).

In one aspect, one or more of the functional configurations of the schedule generation part 152, the collision determination part 154, and the transport control part 156 are implemented in the control system 100, and the remaining functional configurations are implemented in the PLC 151. In another aspect, the schedule generation part 152, the collision determination part 154, and the transport control part 156 are all implemented in the control system 100. In another aspect, the schedule generation part 152, the collision determination part 154, and the transport control part 156 are all implemented in the PLC 151.

### (D1. Schedule Generation Part 152)

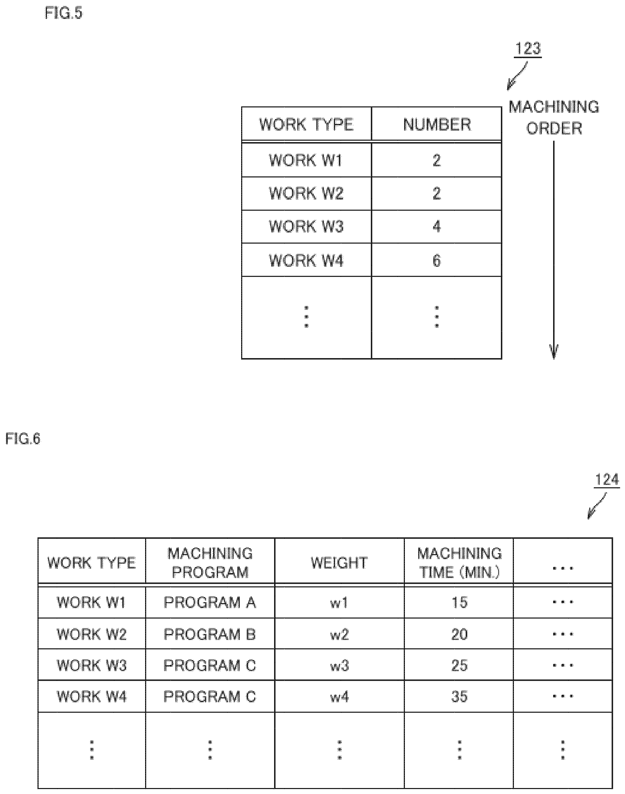

First, the function of the schedule generation part 152 shown in FIG. 4 will now be described, with reference to FIGS. 5 to 7.

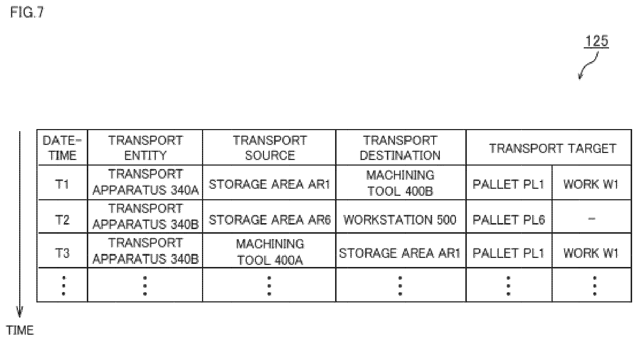

The schedule generation part 152 generates a transport schedule 125 shown in FIG. 7, based on machining settings 123 shown in FIG. 5 and workpiece information 124 shown in FIG. 6.

FIG. 5 is a diagram showing an example of the data structure of the machining settings 123. The operator registers workpieces to be machined in advance by registering the machining settings 123. The machining settings 123 are registered by the operator in the above-described control system 100 or the above-described operation terminal 550, for example. The contents registered by the operator include, for example, identification information (workpiece name, workpiece ID, etc.) of the workpieces to be machined, the number of workpieces to be machined, the machining order of the workpieces, and the like.

In the example in FIG. 5, the machining settings 123 include the machining task of two workpieces W1, the machining task of two workpieces W2, the machining task of four workpieces W3, and the machining task of six workpieces W4.

FIG. 6 is a diagram showing an example of the data structure of the workpiece information 124. As an example, the workpiece information 124 defines, for the identification information of each workpiece, a machining program for realizing machining of the workpiece, a weight of the workpiece, a machining time required for machining the workpiece, and other information relating to machining of the workpiece.

The machining program defined in the workpiece information 124 is registered by the operator in the above-described control system 100, the above-described machine tool 400, or the above-described operation terminal 550, for example. The method of generating the machining program is not particularly limited. As an example, some of the machine tools 400 have a function of automatically generating a machining program by the operator responding to questions that are in interactive form. The machining program is generated by that function, for example. Alternatively, the machining program may be designed by the operator writing program code.

The weight defined in the workpiece information 124 may, for example, be set in advance by the user, or may be registered at the time of designing the machining program. As an example, the weight is input on the operation terminal 550. The weight indicates the weight of the workpiece before the start of processing.

The machining time defined in the workpiece information 124 is input in advance by the operator, for example. Alternatively, the machining time may be calculated from past machining results of each workpiece.

The schedule generation part 152 specifies the machining time for each workpiece defined in the machining settings 123, with reference to the workpiece information 124. Next, the schedule generation part 152 generates the transport schedule 125 shown in FIG. 7, based on the specified machining time, the number of each workpiece defined in the machining settings 123, and the machining order of each workpiece defined in the machining settings 123.

FIG. 7 is a diagram showing an example of the data structure of the transport schedule 125. The transport schedule 125 defines workpiece transport tasks to be executed by the transport apparatus 340. The transport schedule 125 generated by the schedule generation part 152 is stored in a storage device within the transport system 10, for example.

As an example, in the transport schedule 125, the transport date-time, the transport entity, the transport source, the transport destination, and the transport target are associated with each other in chronological order.

The date-time shown in the transport schedule 125 is information that defines the transport start timing of a workpiece or pallet. The date-time is, for example, defined by a date and a time. Note that the transport schedule 125 may further define the transport end timing of the workpiece or pallet.

The transport entity shown in the transport schedule 125 is information for uniquely specifying the transport apparatus 340. The transport entity is, for example, defined by identification information of the transport apparatus 340. Examples of the transport entity include the transport apparatuses 340A and 340B.

The transport source shown in the transport schedule 125 is information for uniquely specifying a storage location or a pallet or workpiece. Examples of the storage location include the storage areas AR1 to AR6 within the storage part 200, the machine tools 400A and 400B, and the workstation 500.

The transport destination shown in the transport schedule 125 is information for uniquely specifying a transport destination of a pallet or workpiece. Examples of the transport destination include the storage areas AR1 to AR6 in the storage part 200, the machine tools 400A and 400B, and the workstation 500.

The transport target shown in the transport schedule 125 is information for uniquely specifying an object to be transported. The transport target is, for example, defined by at least one of identification information of a workpiece and identification information of a pallet.

### (D2. Collision Determination Part 154)

Next, the function of the collision determination part 154 shown in FIG. 4 will be described, again with reference to FIG. 7.

The collision determination part 154 determines whether a collision between the transport apparatuses 340A and 340B will occur, based on the transport schedule 125.

As more specific processing, the collision determination part 154 monitors the date-times defined in the transport schedule 125 and determines whether the timing for executing a workpiece transport task has arrived. If it is determined that the timing for executing a workpiece transport task has arrived, the collision determination part 154 acquires the transport task to be executed from the transport schedule 125. The transport task includes at least a transport entity of a workpiece, a transport source of the workpiece, and a transport destination of the workpiece.

Next, the collision determination part 154 determines whether another transport apparatus other than the transport entity is present on the transport route between the transport source and the transport destination. The position of the other transport apparatus may, for example, be specified from the transport schedule 125, or may be calculated from the feedback signals of the above-described servo motors 335 (see FIG. 2).

If it is determined that another transport apparatus is present on the transport route, the collision determination part 154 determines that a collision between the transport apparatuses 340 will occur. On the other hand, if it is determined that there is no other transport apparatus present on the transport route, the collision determination part 154 determines that a collision between the transport apparatuses 340 will not occur. The result of the determination by the collision determination part 154 is output to the transport control part 156.

Note that the method for determining whether a collision between the transport apparatuses 340 will occur is not limited to the above-described method, and various methods can be employed.

As an example, the transport apparatus 340 may be provided with a sensor capable of detecting an obstacle (hereinafter also referred to as an "obstacle sensor"), and the collision determination part 154 may determine whether a collision between the transport apparatuses 340 will occur, based on the output value of the obstacle sensor. As the obstacle sensor, a distance sensor such as an ultrasonic sensor or a laser sensor, for example, is employed.

The distance sensor is provided in at least one of the transport apparatus 340A and the transport apparatus 340B, such that the distance between the transport apparatus 340A and the transport apparatus 340B is detectable. The collision determination part 154 determines that a collision between the transport apparatuses 340A and 340B will occur, in response to the distance detected by the distance sensor becoming less than a predetermined value. On the other hand, the collision determination part 154 determines that a collision between the transport apparatuses 340A and 340B will not occur, while the distance detected by the distance sensor is greater than or equal to the predetermined value.

### (D3. Transport Control Part 156)

Next, the function of the transport control part 156 shown in FIG. 4 will be described, again with reference to FIG. 7.

The transport control part 156 controls transportation by the transport apparatus 340, in accordance with the transport tasks defined in the transport schedule 125. As an example, when the current date-time becomes "T1", the transport control part 156 controls the drive of the transport entity "transport apparatus 340A" and transports the transport target "pallet PL1" that is in the transport source "storage area AR1" to the transport destination "machine tool 400B". When the current date-time becomes "T2", the transport control part 156 controls the drive of the transport entity "transport apparatus 340B" and transports the transport target "pallet PL6" that is in the transport source "storage area AR6" to the transport destination "workstation 500".

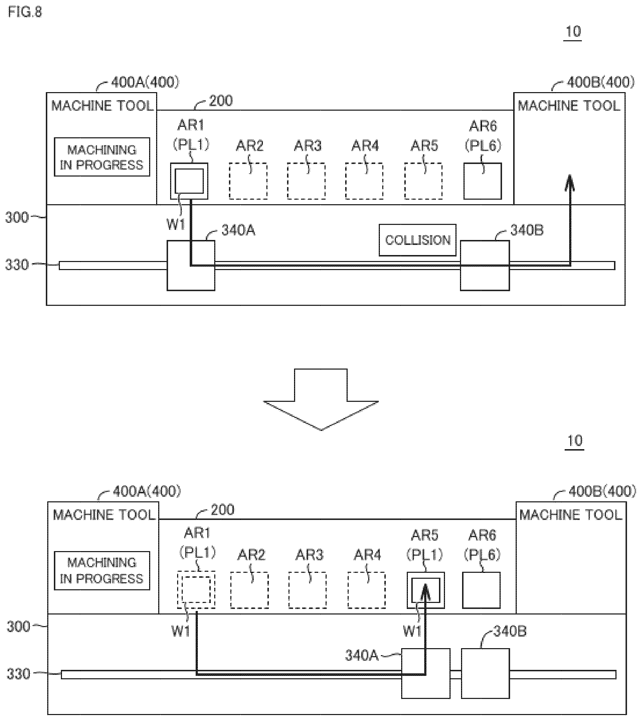

On the other hand, when the collision determination part 154 determines that a collision between the transport apparatuses 340 will occur, the transport control part 156 executes processing for avoiding a collision between the transport apparatuses 340. Hereinafter, an example of the processing for avoiding a collision between the transport apparatuses 340 will be described, with reference to FIGS. 8 to 11.

FIG. 8 is a diagram showing an example of drive processes of the transport apparatuses 340A and 340B. As described above, when the date-time "T1" arrives, the transport apparatus 340A starts processing for transporting the workpiece W1 to the machine tool 400B. At this time, the transport apparatus 340B is present on the travel route that is used by the transport apparatus 340A when transporting the workpiece W1 to be machined to the machine tool 400B, and thus the above-described collision determination part 154 determines that a collision between the transport apparatuses 340A and 340B will occur.

In response to this determination, the transport control part 156 determines a temporary holding area for the workpiece W1 from among the storage areas AR1 to AR6 of the storage part 200. Preferably, the transport control part 156 determines, as the temporary holding area, a free area close to the machine tool 400B, which is the transport destination, among the free areas of the storage part 200 on the transport apparatus 340A side of the transport apparatus 340B.

In the example in FIG. 8, the transport control part 156 determines a temporary holding area from among the storage areas AR1 to AR5 on the transport apparatus 340A side of the transport apparatus 340B. As an example, the transport control part 156 determines the storage area AR5 closest to the machine tool 400B among the storage areas AR1 to AR5, which are free areas, as the temporary holding area.

Next, the transport control part 156 controls the drive of the transport apparatus 340A, such that the workpiece W1 stored in the storage area AR1 is stored in the storage area AR5 determined as the temporary holding area.

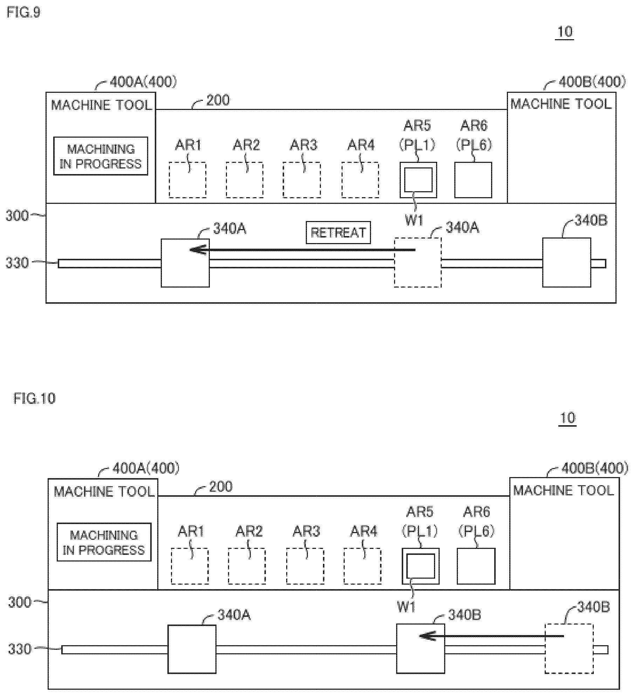

FIG. 9 is a diagram showing the drive processes of the transport apparatuses 340A and 340B following FIG. 8. Referring to FIG. 9, in response to the workpiece W1 being stored in the storage area AR5 serving as the temporary holding area, the transport control part 156 controls the drive of the transport apparatus 340A so as to keep the transport apparatus 340A at a distance from the transport apparatus 340B. The transport apparatus 340A thereby retreats, and the travel route of the transport apparatus 340B is secured.

FIG. 10 is a diagram showing the drive processes of the transport apparatuses 340A and 340B following FIG. 9. Referring to FIG. 10, in response to the transport apparatus 340A having retreated, the transport control part 156 moves the transport apparatus 340B to in front of the storage area AR5, which is the temporary holding area.

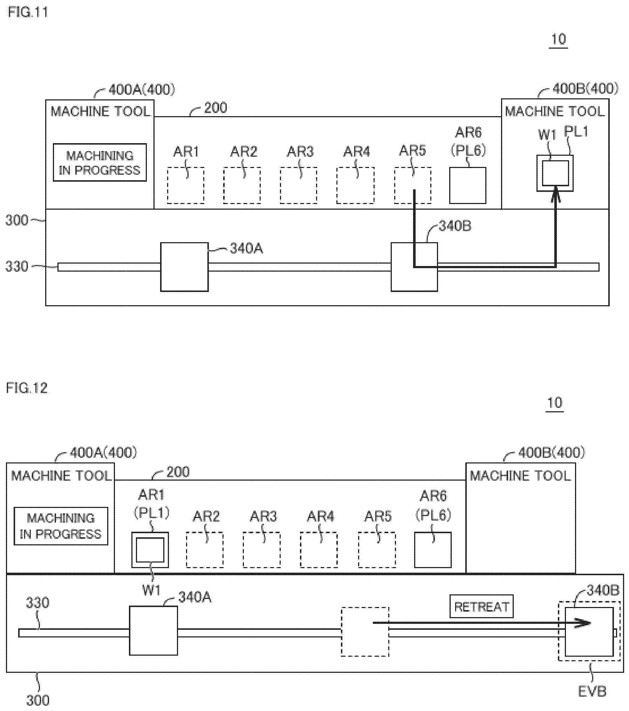

FIG. 11 is a diagram showing the drive processes of the transport apparatuses 340A and 340B following FIG. 10. Referring to FIG. 11, in response to the transport apparatus 340B having moved to in front of the storage area AR5, which is the temporary holding area, the transport control part 156 loads the workpiece W1 stored in the storage area AR5 onto the transport apparatus 340B. Thereafter, the transport control part 156 controls the drive of the transport apparatus 340B so as to transport the workpiece W1 to the machine tool 400B.

As described above, the transport control part 156 drives the transport apparatus 340A so as to store the workpiece W1 to be machined in a temporary holding area within the storage part 200, and drives the transport apparatus 340B so as to transport the workpiece W1 stored in the temporary holding area to the machine tool 400B. A collision between the transport apparatuses 340A and 340B is thereby avoided.

Note that, in the above, an example is described in which the workpiece W1 passes via a temporary holding area when transferring the workpiece W1 from the transport apparatus 340A to the transport apparatus 340B, but the workpiece W1 may be transferred from the transport apparatus 340A to the transport apparatus 340B.

### <E. Collision Avoidance Processing using Retreat Area>

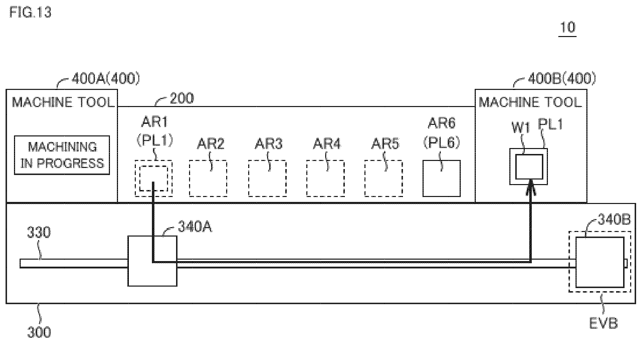

Next, collision avoidance processing using a retreat area will be described, with reference to FIGS. 12 and 13.

In the above example, the transport control part 156 utilizes a temporary holding area within the storage part 200 to transport a workpiece to be machined to the machine tool 400. That is, the transport apparatus 340A transports the workpiece to the temporary holding area, and the other transport apparatus 340B transports the workpiece from the temporary holding area to the machine tool 400. In contrast, in this example, the transport control part 156 transports a workpiece to be machined to the machine tool 400 without utilizing a temporary holding area, by causing the transport apparatus 340B to retreat to a retreat area.

FIG. 12 is a diagram showing an example of drive processes of the transport apparatuses 340A and 340B. As shown in FIG. 12, in this example, a retreat area EVB is provided. The retreat area EVB is, for example, provided at a distance from the transport apparatus 340A (e.g., at the end of the transport route 330) and is not utilized by the transport apparatus 340A. Typically, the distance on the transport route 330 from the transport apparatus 340A to the retreat area EVB is longer than the distance on the transport route 330 from the transport apparatus 340A to the machine tool 400B.

If the above-described collision determination part 154 determines that a collision between the transport apparatuses 340A and 340B will occur, the transport control part 156 controls the drive of the transport apparatus 340B so as to keep the transport apparatus 340B at a distance from the transport apparatus 340A. The transport apparatus 340B thereby moves to the retreat area EVB. As a result, the travel route of the transport apparatus 340Ais secured.

FIG. 13 is a diagram showing the drive processes of the transport apparatuses 340A and 340B following FIG. 12. Referring to FIG. 13, in response to the transport apparatus 340B having moved to the retreat area EVB, the transport control part 156 moves the transport apparatus 340A to in front of the storage area AR1 storing the workpiece W1 to be transported. Thereafter, the transport control part 156 controls the drive of the transport apparatus 340A so as to transport the workpiece W1 stored in the storage area AR1 to the machine tool 400B.

As described above, in this example, the transport control part 156 avoids a collision between the transport apparatus 340A and the transport apparatus 340B by causing the transport apparatus 340B to retreat to the retreat area EVB.

Note that, in the above, an example is described in which the retreat area EVB for the transport apparatus 340B is provided in the transport part 300, but a retreat area for the transport apparatus 340A (hereinafter also referred to as "retreat area EVA") may be provided in the transport part 300. The retreat area EVA is, for example, provided at a distance from the transport apparatus 340B (e.g., at the end of the transport route 330). Typically, the distance on the transport route 330 from the transport apparatus 340B to the retreat area EVA is longer than the distance on the transport route 330 from the transport apparatus 340B to the machine tool 400A. As an example, the retreat area EVA for the transport apparatus 340A is located at the opposite end to the retreat area EVB for the transport apparatus 340B.

The travel route of the transport apparatus 340B is secured by the transport apparatus 340A moving to the retreat area EVA. As a result, a collision between the transport apparatus 340A and the transport apparatus 340B can be avoided.

### <F. Hardware Configuration of Control System 100>

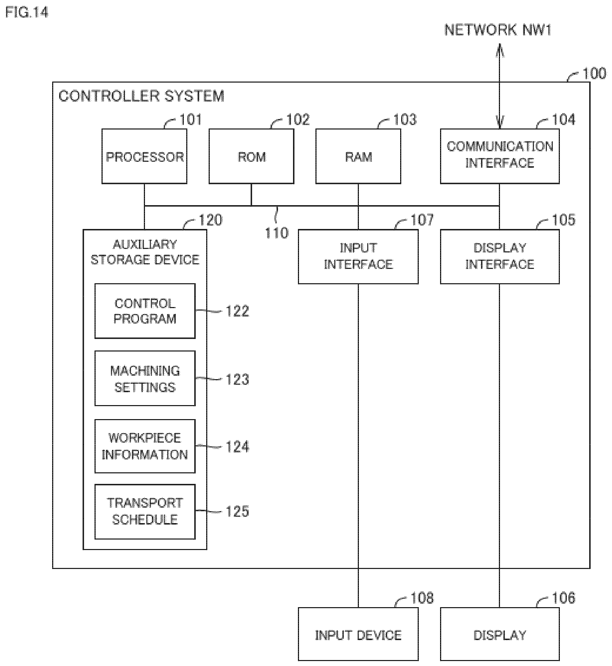

The hardware configuration of the control system 100 will now be described, with reference to FIG. 14. FIG. 14 is a schematic diagram showing an example of the hardware configuration of the control system 100.

The control system 100 includes a processor 101, a ROM (Read Only Memory) 102, a RAM (Random Access Memory) 103, a communication interface 104, a display interface 105, an input interface 107, and an auxiliary storage device 120. These components are connected to a bus 110.

The processor 101 is constituted by, for example, at least one integrated circuit. The integrated circuit can be constituted by, for example, at least one CPU (Central Processing Unit), at least one GPU (Graphics Processing Unit), at least one ASIC (Application Specific Integrated Circuit), at least one FPGA (Field Programmable Gate Array), a combination thereof, or the like.

The processor 101 controls operations of the control system 100 by running various programs such as a control program 122 and an operating system. The control program 122 is a program related to transport control of a workpiece. In response to receiving a run command for the control program 122, the processor 101 reads out the control program 122 from the auxiliary storage device 120 or the ROM 102 to the RAM 103. The RAM 103 functions as a working memory and temporarily stores various data necessary for running the control program 122.

A LAN (Local Area Network)), an antenna, or the like is connected to the communication interface 104. The control system 100 is connected to the network NW1 via the communication interface 104. The control system 100 thereby exchanges data with an external device connected to the network NW1. Examples of the external device include the control panel 150, a server (not shown), and the like. The control system 100 may be configured to be able to download the control program 122 from the external device.

A display 106 is connected to the display interface 105. The display interface 105 sends an image signal for displaying an image to the display 106, in accordance with an instruction from the processor 101 or the like. The display 106 is, for example, a liquid crystal display, an organic EL (ElectroLuminescence) display, or other display device. Note that the display 106 may be constituted integrally with the control system 100 or may be constituted separately from the control system 100.

An input device 108 is connected to the input interface 107. The input device 108 is, for example, a mouse, a keyboard, a touch panel, or other device capable of receiving user operations. Note that the input device 108 may be constituted integrally with the control system 100 or may be constituted separately from the control system 100.

The auxiliary storage device 120 is, for example, a storage medium such as a hard disk or a flash memory. The auxiliary storage device 120 stores the control program 122, the above-described machining settings 123, the above-described workpiece information 124, the above-described transport schedule 125, and the like. The storage location of various data stored in the auxiliary storage device 120 is not limited to the auxiliary storage device 120. The various data may be stored in a storage area of the processor 101 (e.g., cache memory, etc.), or in the ROM 102, the RAM 103, an external device (e.g., PLC 151, external server), or the like.

Note that the control program 122 may be incorporated as part of any program, rather than being provided as a single program. In this case, transport control processing by the control program 122 is realized in cooperation with that program. Even such a program that does not include some modules does not depart from the spirit of the control program 122 according to the present embodiment. Furthermore, some or all of the functions provided by the control program 122 may be realized by dedicated hardware. Furthermore, the control system 100 may be configured in a form such as a so-called cloud service in which at least one server executes part of the processing of the control program 122.

### <G. Hardware Configuration of PLC 151>

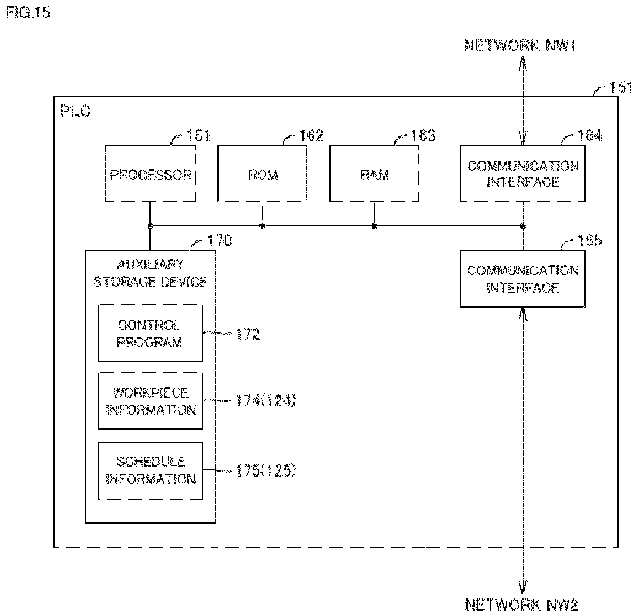

An example of the hardware configuration of the PLC 151 will now be described, with reference to FIG. 15. FIG. 15 is a block diagram showing a main hardware configuration of the PLC 151.

The PLC 151 includes a processor 161, a ROM (Read Only Memory) 162, a RAM (Random Access Memory) 163, communication interfaces 164 and 165, and an auxiliary storage device 170.

The processor 161 is constituted by at least one integrated circuit. The integrated circuit is constituted by, for example, at least one CPU, at least one MPU (Micro Processing Unit), at least one ASIC, at least one FPGA, a combination thereof, or the like.

The processor 161 controls the operations of the transport apparatus 340 and the machine tool 400 by running various programs such as a control program 172. In response to receiving a run command for the control program 172, the processor 161 reads out the control program 172 from the auxiliary storage device 170 to the ROM 162. The RAM 163 functions as a working memory and temporarily stores various data necessary for running the control program 172.

A LAN, an antenna, or the like is connected to the communication interface 164. The PLC 151 is connected to the network NW1 via the communication interface 164. The PLC 151 thereby exchanges data with an external device connected to the network NW1. Examples of the external device include the control system 100, a server (not shown), and the like.

The communication interface 165 is an interface for connecting to the network NW2, which is a field network. The PLC 151 exchanges data with an external device connected to the network NW2 via the communication interface 165. Examples of the external device include the remote I/O units 61 to 63.

The auxiliary storage device 170 is, for example, a storage medium such as a hard disk or a flash memory. The auxiliary storage device 170 stores the control program 172, workpiece information 174, a transport schedule 175, and the like. The workpiece information 174 corresponds to the workpiece information 124 received from the above-described control system 100. The transport schedule 175 corresponds to the transport schedule 125 received from the above-described control system 100. The storage location of the various data stored in the auxiliary storage device 170 is not limited to the auxiliary storage device 170, and the various data may be stored in a storage area of the processor 161 (e.g., cache area, etc.), or in the ROM 162, the RAM 163, an external device (e.g., server), or the like.

The control program 172 may be incorporated as part of any program, rather than being provided as a single program. In this case, control processing according to the present embodiment is realized in cooperation with that program. Even such a program that does not include some modules does not depart from the spirit of the control program 172 according to the present embodiment. Furthermore, some or all of the functions provided by the control program 172 may be realized by dedicated hardware. Furthermore, the PLC 151 may be configured in a form such as a so-called cloud service in which at least one server executes part of the processing of the control program 172.

### <H. Hardware Configuration of Machine Tool 400>

An example of the hardware configuration of the machine tool 400 will now be described, with reference to FIG. 16. FIG. 16 is a block diagram showing a main hardware configuration of the machine tool 400.

The machine tool 400 includes the CNC 401, a ROM 402, a RAM 403, a fieldbus controller 404, a display interface 405, an input interface 409, servo drivers 411A to 411D, servo motors 412A to 412D, encoders 413A to 413D, ball screws 414A and 414B, and the spindles 415 for attaching tools. These devices are connected via a bus (not shown).

The CNC 401 is constituted by at least one integrated circuit. The integrated circuit is constituted by, for example, at least one CPU, at least one MPU, at least one ASIC, at least one FPGA, a combination thereof, or the like.

The CNC 401 controls the operations of the CNC 400 by running various programs such as a machining program 422. In response to receiving a run command for the machining program 422, the CNC 401 reads out the machining program 422 from an auxiliary storage device 420 to the ROM 402. The RAM 403 functions as a working memory and temporarily stores various data necessary for running the machining program 422.

The fieldbus controller 404 is an interface for realizing communication with the PLC 151 via the remote I/O unit 62. The CNC 400 exchanges data with the PLC 151 via the fieldbus controller 404.

The display interface 405 is connected to a display device such as a display 430 and sends an image signal for displaying an image to the display 430 in accordance with an instruction from the CNC 401 or the like. The display 430 is, for example, a liquid crystal display, an organic EL display, or other display device.

The input interface 409 can be connected to an input device 431. The input device 431 is, for example, a mouse, a keyboard, a touch panel, or other input device capable of receiving user operations.

The CNC 400 controls the servo driver 411A in accordance with the machining program 422. The servo driver 411A sequentially receives input of a target rotation speed (or target position) from the CNC 401, controls the servo motor 412A such that the servo motor 412A rotates at the target rotation speed, and drives a workpiece installation base (not shown) in an X-axis direction. More specifically, the servo driver 411A calculates an actual rotation speed (or actual position) of the servo motor 412A from the feedback signal of the encoder 413A. The servo driver 411A increases the rotation speed of the servo motor 412A if the actual rotation speed is lower than the target rotation speed, and decreases the rotation speed of the servo motor 412A if the actual rotation speed is higher than the target rotation speed. In this way, the servo driver 411A approximates the rotation speed of the servo motor 412A to the target rotation speed while sequentially receiving feedback on the rotation speed of the servo motor 412A. The servo driver 411A moves the workpiece installation base connected to the ball screw 414A in the X-axis direction, and moves the workpiece installation base to any position in the X-axis direction.

With similar motor control, the servo driver 411B moves the workpiece installation base connected to the ball screw 414B in a Y-axis direction in accordance with a control instruction from the CNC 400, and moves the workpiece installation base to any position in the Y-axis direction. By performing similar motor control, the servo driver 411C moves the spindle 415 in a Z-axis direction in accordance with a control instruction from the CNC 400, and moves the spindle 415 to any position in the Z-axis direction. By performing similar motor control, the servo driver 411D controls the rotation speed of the spindle 415 with the axis direction of the spindle 415 as the rotation center, in accordance with a control instruction from the CNC 400.

The auxiliary storage device 420 is, for example, a storage medium such as a hard disk or a flash memory. The auxiliary storage device 420 stores the machining program 422 and the like. The storage location of the machining program 422 is not limited to the auxiliary storage device 420, and the machining program 422 may be stored in a storage area of the CNC 401 (e.g., cache area, etc.), or in the ROM 402, the RAM 403, an external device (e.g., server), or the like.

### <I. Hardware Configuration of Operation Terminal 550>

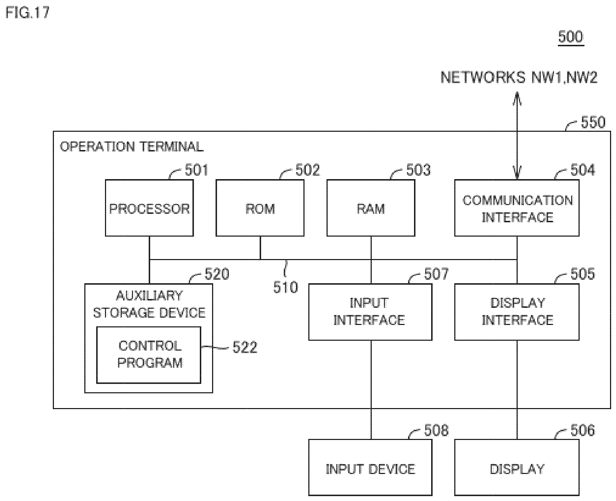

The hardware configuration of the operation terminal 550 installed in the workstation 500 will now be described, with reference to FIG. 17. FIG. 17 is a schematic diagram showing an example of the hardware configuration of the operation terminal 550.

The operation terminal 550 includes a processor 501, a ROM 502, a RAM 503, a communication interface 504, a display interface 505, an input interface 507, and an auxiliary storage device 520. These components are connected to a bus 510.

The processor 501 is constituted by, for example, at least one integrated circuit. The integrated circuit may be constituted by, for example, at least one CPU, at least one GPU, at least one ASIC, at least one FPGA, a combination thereof, or the like.

The processor 501 controls operations of the operation terminal 550 by running various programs such as a control program 522 and an operating system. In response to receiving a run command for the control program 522, the processor 501 reads out the control program 522 from the auxiliary storage device 520 or the ROM 502 to the RAM 503. The RAM 503 functions as a working memory and temporarily stores various data necessary for running the control program 522.

A LAN, an antenna, or the like is connected to the communication interface 504. The operation terminal 550 is connected to the networks NW1 and NW2 via the communication interface 504. The operation terminal 550 thereby exchanges data with an external device connected to the networks NW1 and NW2. Examples of the external device include the control panel 150, a server (not shown), and the like. The operation terminal 550 may be configured to be able to download the control program 522 from the external device.

A display 506 is connected to the display interface 505. The display interface 505 sends an image signal for displaying an image to the display 506, in accordance with an instruction from the processor 501 or the like. The display 506 displays screens such as a selection screen for receiving permission or rejection of mandatory transportation of a pallet during work at the workstation 500. The display 506 is, for example, a liquid crystal display, an organic EL display, or other display device. Note that the display 506 may be constituted integrally with the operation terminal 550 or may be constituted separately from the operation terminal 550.

An input device 508 is connected to the input interface 507. The input device 508 is, for example, a mouse, a keyboard, a touch panel, or other device capable of receiving user operations. Note that the input device 508 may be constituted integrally with the operation terminal 550 or may be constituted separately from the operation terminal 550.

The auxiliary storage device 520 is, for example, a storage medium such as a hard disk or a flash memory. The auxiliary storage device 520 stores the control program 522 and the like. The storage location of the control program 522 and the like is not limited to the auxiliary storage device 520, and the control program 522 and the like may be stored in a storage area of the processor 501 (e.g., cache memory, etc.), or in the ROM 502, the RAM 503, an external device (e.g., server), or the like.

The control program 522 may be incorporated as part of any program, rather than being provided as a single program. In this case, control processing by the control program 522 is realized in cooperation with that program. Even such a program that does not include some modules does not depart from the spirit of the control program 522 according to the present embodiment. Furthermore, some or all of the functions provided by the control program 522 may be realized by dedicated hardware. Furthermore, the operation terminal 550 may be constituted in a form such as a so-called cloud service in which at least one server executes part of the processing of the control program 522.

### <J. Flowchart>

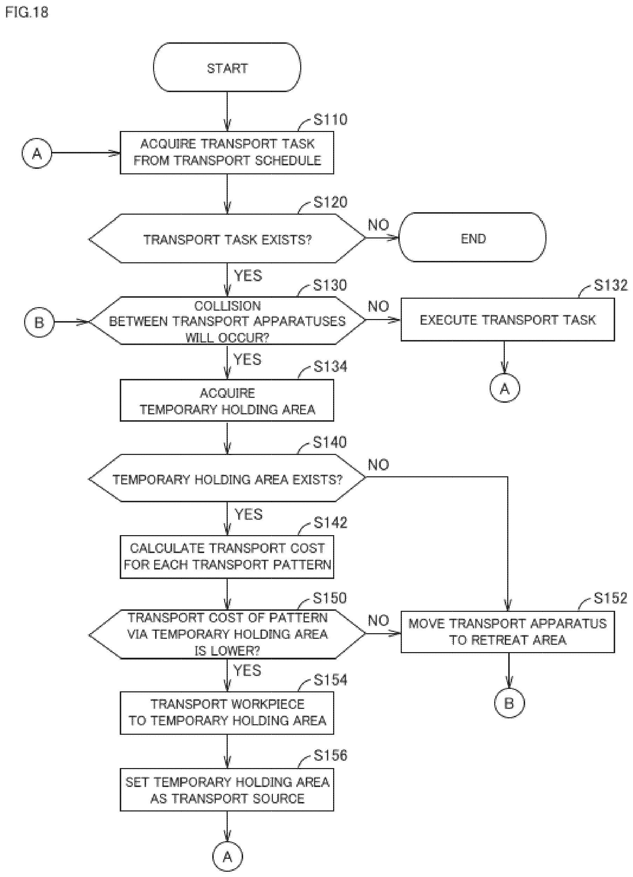

Next, the control structure of the transport system 10 will be described, with reference to FIG. 18. FIG. 18 is a flowchart showing the flow of transport control processing by the transport system 10.

The processing shown in FIG. 18 is realized by the control part 50 running the above-described control program 122 or the above-described control program 172. In another aspect, some or all of the processing may be executed by a circuit element or other hardware.

In step S110, the control part 50 functions as the above-described transport control part 156 and acquires a transport task whose execution timing has arrived, with reference to the transport schedule 125 (see FIG. 7). The transport task defines the transport date-time of the workpiece, the transport entity of the workpiece, the transport source of the workpiece, the transport destination of the workpiece, and the like. Hereinafter, the transport apparatus 340 serving as the transport entity is also referred to as the main transport apparatus, and the transport apparatus 340 that is not the main transport apparatus is also referred to as the secondary transport apparatus.

In step S120, the control part 50 determines whether there is a transport task. As an example, the control part 50 determines that there is a transport task if a transport task is acquired in step S110, and determines that there is not a transport task if a transport task cannot be acquired in step S110. If it is determined that there is a transport task (YES in step S120), the control part 50 switches control to step S130. If this is not the case (NO in step S120), the control part 50 ends the processing shown in FIG. 18.

In step S130, the control part 50 functions as the above-described collision determination part 154 and determines whether a collision between the main transport apparatus and the secondary transport apparatus will occur. The method of determination is as described above, and description thereof will not be repeated. If it is determined that a collision between the main transport apparatus and the secondary transport apparatus will occur (YES in step S130), the control part 50 switches control to step S134. If this is not the case (NO in step S130), the control part 50 switches control to step S132.

In step S132, the control part 50 functions as the above-described transport control part 156 and controls the drive of the main transport apparatus, in accordance with the transport task acquired in step S110. In response to the processing of step S132 having been completed, the control part 50 rewrites the transport schedule 125 such that the transport task acquired in step S110 is completed.

In step S134, the control part 50 functions as the above-described transport control part 156 and acquires a temporary holding area for the workpiece from among the free areas of the storage part 200. At this time, the control part 50 determines, as the temporary holding area, a free area close to the machine tool 400 serving as the transport destination, among the free spaces within the storage part 200 on the main transport apparatus side of the secondary transport apparatus.

The storage status of the pallets in the storage part 200 is, for example, managed in storage location information (not shown). The storage location information defines whether a pallet (or workpiece) is stored, an identification number of the stored pallet (or workpiece), and the like for each storage area within the storage part 200. The control part 50 updates the storage location information each time a pallet or workpiece is transported.

In step S140, the control part 50 determines whether there is a temporary holding area within the storage part 200. If it is determined that there is a temporary holding area within the storage part 200 (YES in step S140), the control part 50 switches control to step S142. If this is not the case (NO in step S140), the control part 50 switches control to step S152.

In step S142, the control part 50 calculates the transport cost for a plurality of transport patterns. The transport cost is, for example, calculated based on the travel distance of the main transport apparatus and the travel distance of the secondary transport apparatus. As an example, the transport cost is higher as the total value of the moving distance of the main transport apparatus and the moving distance of the secondary transport apparatus increases, and the transport cost is lower as the total value is decreases. As an example, the control part 50 calculates the transport cost of a first transport pattern and the transport cost of a second transport pattern.

The first transport pattern corresponds to the transport pattern shown in FIGS. 8 to 11 described above, and is a pattern for utilizing a temporary holding area to transport the workpiece to be machined to the machine tool 400. That is, with the first transporting pattern, the main transport apparatus transports the workpiece to a temporary holding area, and the secondary transport apparatus transports the workpiece from the temporary holding area to the machine tool 400.

The second transport pattern corresponds to the transport pattern shown in FIGS. 12 and 13, and is a pattern for transporting the workpiece to be machined to the machine tool 400 without utilizing a temporary holding area. That is, with the second transporting pattern, the secondary transport apparatus moves to the above-described retreat area EVB, and the main transport apparatus transports the workpiece to be machined directly to the machine tool 400.

In step S150, the control part 50 determines whether the transport cost of the first transport pattern is lower than the transport cost of the second transport pattern. If it is determined that the transport cost of the first transport pattern is lower than the transport cost of the second transport pattern (YES in step S150), the control part 50 switches control to step S154. If this is not the case (NO in step S150), the control part 50 switches control to step S152.

In step S152, the control part 50 moves the secondary transport apparatus to the above-described retreat area EVB. Thereafter, control is returned to step S130 and if it is determined that a collision between the main transport apparatus and the secondary transport apparatus will not occur (YES in step S130), the main transport apparatus directly transports the workpiece to be machined to the machine tool 400 (step S132).

In step S154, the control part 50 controls the drive of the main transport apparatus and stores the workpiece to be machined in the temporary holding area acquired in step S134.

In step S156, the control part 50 rewrites the transport task acquired in step S110 and updates the transport schedule 125. More specifically, the control part 50 rewrites the information of the transport source to the temporary holding area, and rewrites the information of the transport entity from the main transport apparatus to the secondary transport apparatus. When the updated transport task has been executed, the workpiece stored in the temporary holding area is thereby transported to the machine tool 400 serving as the transport destination by the secondary transport apparatus.

### <K. Another Example of Collision Avoidance Processing>

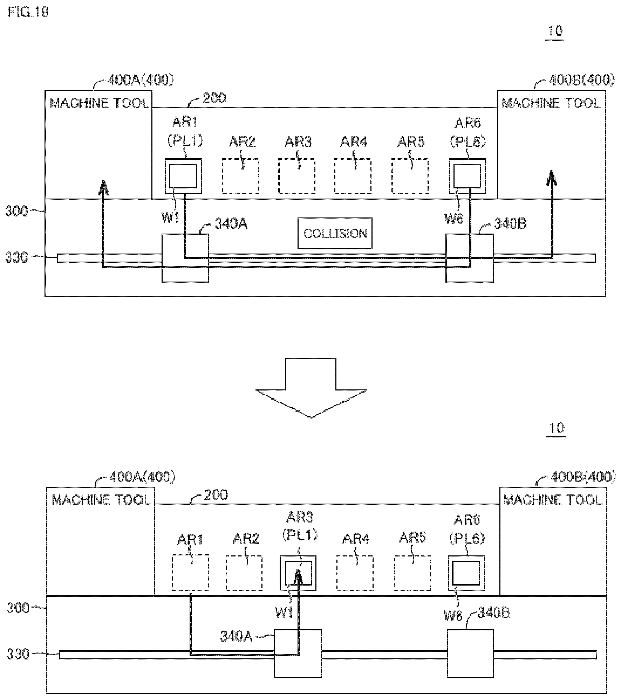

Next, another example of the collision avoidance processing will now be described, with reference to FIGS. 19 to 22.

In FIGS. 8 to 11 described above, a method for avoiding a collision that can occur when the transport apparatus 340A transports a workpiece to the machine tool 400B is described. In contrast, in this example, a method for avoiding a collision that can occur when the transport apparatus 340A transports a workpiece to the machine tool 400B and the transport apparatus 340B transports a workpiece to the machine tool 400A will be described.

FIG. 19 is a diagram showing an example of drive processes of the transport apparatuses 340A and 340B. Referring to FIG. 19, it is assumed that at a certain timing, the transport control part 156 receives a transport task for controlling the transport apparatus 340A to transport the workpiece W1 to the machine tool 400B, and a transport task for controlling the transport apparatus 340B to transport a workpiece W6 to the machine tool 400A. In this case, the transport apparatuses 340A and 340B intersect on the transport route 330, and thus the transport apparatuses 340A and 340B will collide.

In order to avoid such a collision, first, the transport control part 156 moves the transport apparatus 340A to in front of the storage area AR1 storing the workpiece W1 to be transported. Thereafter, the transport control part 156 loads the workpiece W1 stored in the storage area AR1 onto the transport apparatus 340A.

Next, the transport control part 156 determines a temporary holding area for the workpiece W1 from among the free areas within the storage part 200 on the transport apparatus 340A side of the transport apparatus 340B. In the example in FIG. 19, the transport control part 156 determines a temporary holding area from among the storage areas AR1 to AR5 on the transport apparatus 340A side of the transport apparatus 340B. As an example, the transport control part 156 determines the storage area AR3 as the temporary holding area.

Next, the transport control part 156 moves the transport apparatus 340A to in front of the storage area AR3 determined as the temporary holding area and stores the workpiece W 1 in the storage area AR3. Thereafter, in response to the workpiece W1 being stored in the storage area AR3, the transport control part 156 drives the transport apparatus 340A so as to keep the transport apparatus 340A at a distance from the transport apparatus 340B. As a result, the transport apparatus 340A retreats, and the travel route of the transport apparatus 340B is secured.

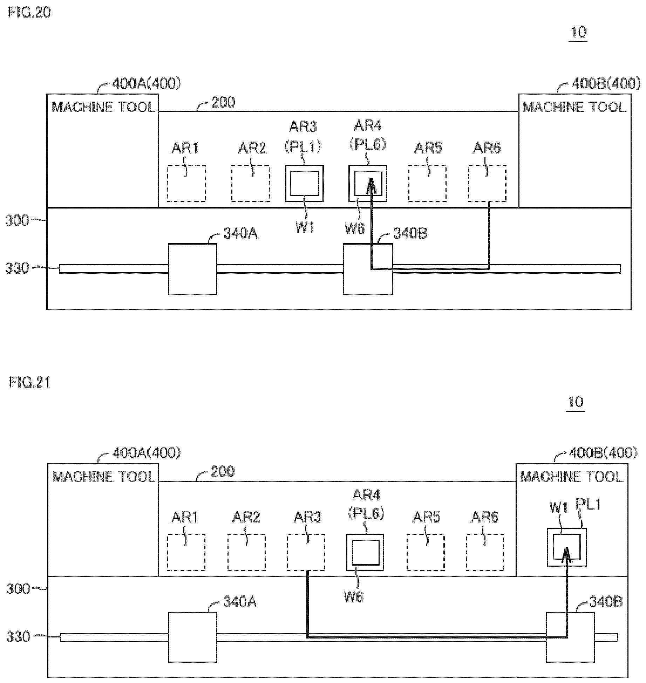

FIG. 20 is a diagram showing the drive processes of the transport apparatuses 340A and 340B following FIG. 19. Referring to FIG. 20, in response to the transport apparatus 340A having retreated, the transport control part 156 moves the transport apparatus 340B to in front of the storage area AR6 storing the workpiece W6 to be transported. Thereafter, the transport control part 156 loads the workpiece W6 stored in the storage area AR6 onto the transport apparatus 340B.

Next, the transport control part 156 determines a temporary holding area for the workpiece W6 from among the free areas within the storage part 200 on the transport apparatus 340B side of the temporary holding area of the workpiece W1 (i.e., the storage area AR3). In the example in FIG. 20, the transport control part 156 determines a temporary holding area from among the storage areas AR4 and AR5 on the transport apparatus 340B side of the storage area AR3. As an example, the transport control part 156 determines, as the temporary holding area, the storage area AR4, which is closest to the storage area AR3 among the storage areas AR4 and AR5, which are free areas.

Next, the transport control part 156 moves the transport apparatus 340B to in front of the storage area AR4 determined as the temporary holding area and stores the workpiece W6 in the temporary holding area.

FIG. 21 is a diagram showing the drive processes of the transport apparatuses 340A and 340B following FIG. 20. Referring to FIG. 21, in response to the workpiece W6 being stored in the storage area AR4 serving as the temporary holding area, the transport control part 156 moves the transport apparatus 340B to in front of the storage area AR3. Thereafter, the transport control part 156 loads the workpiece W1 stored in the storage area AR3 onto the transport apparatus 340B and transports the workpiece W1 to the machine tool 400B. Transportation of the workpiece W1 to the machine tool 400B is thereby completed.

FIG. 22 is a diagram showing the drive processes of the transport apparatuses 340A and 340B following FIG. 21. Referring to FIG. 22, in response to transportation of the workpiece W1 to the machine tool 400B being completed, the transport control part 156 moves the transport apparatus 340A to in front of the storage area AR4. Thereafter, the transport control part 156 loads the workpiece W6 stored in the storage area AR4 onto the transport apparatus 340A and transports the workpiece W6 to the machine tool 400A. Transportation of the workpiece W6 to the machine tool 400A is thereby completed.

### <L. Modifications>

Note that, in the above, transport control of the transport apparatus 340 assuming a straight transport route 330 having two ends was described, but the shape of the transport route 330 is not particularly limited.

As an example, the transport route 330 may be an endless route. An example of an endless transport route 330 is a circular transport route 330. The various transport processing described above can also be applied to such an endless transport route 330.

The embodiments disclosed herein are to be considered in all respects as illustrative and not restrictive. The scope of the invention is indicated by the claims rather than by the foregoing description, and all changes that come within the meaning and range of equivalency of the claims are intended to be embraced therein.

### List of Reference Numerals

10 Transport system, 50 Control part, 61 Remote I/O unit, 62 Remote I/O unit, 63 Remote I/O unit, 100 Control system, 101 Processor, 102 ROM, 103 RAM, 104 Communication interface, 105 Display interface, 106 Display, 107 Input interface, 108 Input device, 110 Bus, 120 Auxiliary storage device, 122 Control program, 123 Machining settings, 124 Workpiece information, 125 Transport schedule, 150 Control panel, 152 Schedule generation part, 154 Collision determination part, 156 Transport control part, 161 Processor, 162 ROM, 163 RAM, 164 Communication interface, 165 Communication interface, 170 Auxiliary storage device, 172 Control program, 174 Workpiece information, 175 Transport schedule, 200 Storage part, 300 Transport part, 330 Transport route, 334 Servo driver, 335 Servo motor, 340 Transport apparatus, 340A Transport apparatus, 340B Transport apparatus, 400 Machine tool, 400A Machine tool, 400B Machine tool, 402 ROM, 403 RAM, 404 Fieldbus controller, 405 Display interface, 409 Input interface, 411 Servo driver, 411A Servo driver, 411B Servo driver, 411C Servo driver, 411D Servo driver, 412 Servo motor, 412A Servo motor, 412B Servo motor, 412C Servo motor, 412D Servo motor, 413AEncoder, 413B Encoder, 413C Encoder, 413D Encoder, 414ABall screw, 414B Ball screw, 415 Spindle, 420 Auxiliary storage device, 422 Machining program, 430 Display, 431 Input device, 500 Workstation, 501 Processor, 502 ROM, 503 RAM, 504 Communication interface, 505 Display interface, 506 Display, 507 Input interface, 508 Input device, 510 Bus, 520 Auxiliary storage device, 522 Control program, 550 Operation terminal.

## Claims

1. A workpiece transport system comprising:
a transport route;
a first transport apparatus configured to travel on the transport route and for transporting a workpiece;
a second transport apparatus configured to travel on the transport route and for transporting a workpiece;
a machine tool for machining a workpiece transported by the first transport apparatus or the second transport apparatus; and
a control part for controlling the transport system,
the control part executing
processing for determining whether a collision between the first transport apparatus and the second transport apparatus will occur when the first transport apparatus transports a workpiece to be machined to the machine tool, and
if it is determined that the collision will occur, executing processing for controlling a drive of the first transport apparatus and a drive of the second transport apparatus such that the collision does not occur, and transporting the workpiece to be machined to the machine tool.

2. The transport system according to claim 1,
wherein the processing for transporting includes:
processing for transferring the workpiece to be machined from the first transport apparatus to the second transport apparatus; and
processing for controlling the drive of the second transport apparatus so as to transport the workpiece to be machined transferred to the second transport apparatus to the machine tool.

3. The transport system according to claim 2, further comprising:
a storage part capable of storing a plurality of workpieces,
wherein the processing for transferring includes:
processing for driving the first transport apparatus so as to store the workpiece to be machined in a temporary holding area within the storage part; and
processing for transferring the workpiece to be machined stored in the temporary holding area from the temporary holding area to the second transport apparatus.

4. The transport system according to claim 3,
wherein the control part further
executes processing for determining, as the temporary holding area, a free area close to the machine tool among free areas within the storage part on the first transport apparatus side of the second transport apparatus.

5. The transport system according to claim 4,
wherein the control part further
executes processing for controlling the drive of the second transport apparatus so as to keep the second transport apparatus at a distance from the first transport apparatus, before executing the processing for determining.

6. The transport system according to any one of claims 1 to 5,
wherein, in the processing for determining, it is determined that the collision will occur, if the second transport apparatus is on the travel route when the first transport apparatus is transporting the workpiece to be machined to the machine tool.

7. A control method in a workpiece transport system,
the transport system including:
a transport route;
a first transport apparatus configured to travel on the transport route and for transporting a workpiece;
a second transport apparatus configured to travel on the transport route and for transporting a workpiece; and
a machine tool for machining a workpiece transported by the first transport apparatus or the second transport apparatus,
the control method comprising:
a step of determining whether a collision between the first transport apparatus and the second transport apparatus will occur when the first transport apparatus transports a workpiece to be machined to the machine tool; and
a step of, if it is determined that the collision will occur, controlling a drive of the first transport apparatus and a drive of the second transport apparatus such that the collision does not occur, and transporting the workpiece to be machined to the machine tool.

8. A control program in a workpiece transport system,
the transport system including:
a transport route;
a first transport apparatus configured to travel on the transport route and for transporting a workpiece;
a second transport apparatus configured to travel on the transport route and for transporting a workpiece; and
a machine tool for machining a workpiece transported by the first transport apparatus or the second transport apparatus,
the program causing the transport system to execute:
a step of determining whether a collision between the first transport apparatus and the second transport apparatus will occur when the first transport apparatus transports a workpiece to be machined to the machine tool; and
a step of, if it is determined that the collision will occur, controlling a drive of the first transport apparatus and a drive of the second transport apparatus such that the collision does not occur, and transporting the workpiece to be machined to the machine tool.
